# EUROPEAN PATENT APPLICATION

(11) **EP 4 751 827 A1**
(43) Date of publication of application: **03.06.2026**
(21) Application number: 23946611.3
(22) Date of filing: 24.07.2023
(51) Int. Cl.: B23B 27/00, B23B 25/06, B23Q 17/09

(54) **CUTTING SYSTEM AND POWER FEEDING DEVICE**

(71) Applicant: Sumitomo Electric Industries, Ltd., Osaka-shi, Osaka 541-0041 (JP)
(72) Inventor: OHMORI, Hiroki, Osaka-shi, Osaka 541-0041 (JP)
(74) Representative: Boult Wade Tennant LLP
(86) International application number: PCT/JP2023/027016
(87) International publication number: WO 2025/022525

(57) **Abstract**

A cutting system according to an embodiment of the present disclosure comprises: a cutting tool that includes a body part disposed in a machining space of a machine tool, a sensor provided to the body part, and a wireless transmission unit for transmitting detection information indicating an output of the sensor; and a power feeding device that feeds power to the cutting tool. The power feeding device comprises: a power transmission antenna provided in the machining space; and a controller for controlling power feeding performed by the power transmission antenna. The cutting tool further includes a power reception antenna circuit for receiving power wirelessly transmitted from the power transmission antenna.

## Description

### TECHNICAL FIELD

The present disclosure relates to a cutting system and a power supply device.

### BACKGROUND ART

Patent literature 1 discloses a cutting tool including a body portion, a sensor unit disposed in the body portion, a wireless communication unit that transmits information indicating an output of the sensor to the outside, and a battery that supplies electric power to each unit. The battery is housed in a battery housing portion which is a space provided in the body portion. The cutting tool can monitor the state of the cutting tool during machining using a sensor and transmit the state to the outside.

### CITATION LIST

### [PATENT LITERATURE]

[Patent Literature 1] International Publication No. WO 2022/230149

### SUMMARY OF INVENTION

A cutting system according to an embodiment of the present disclosure includes a cutting tool that includes a body portion disposed in a machining space of a machine tool, a sensor provided in the body portion, and a wireless transmission unit that transmits detection information indicating an output of the sensor, and a power supply device that supplies power to the cutting tool. The power supply device includes a power transmitting antenna provided in the machining space, and a control device that controls power supply through the power transmitting antenna. The cutting tool further includes a power receiving antenna circuit that receives electric power wirelessly transmitted from the power transmitting antenna.

### BRIEF DESCRIPTION OF THE DRAWINGS

[FIG. 1] FIG. 1 is a diagram illustrating an overall configuration of a cutting system according to an embodiment.
[FIG. 2] FIG. 2 is a block diagram illustrating an example of the configuration of a cutting tool.
[FIG. 3] FIG. 3 is a block diagram illustrating an example of the configuration of a power supply device.
[FIG. 4] FIG. 4 is a flowchart illustrating an example of a power supply control process executed by a processing unit.
[FIG. 5] FIG. 5 is a flowchart illustrating an example of a pointing direction control process executed by the processing unit.
[FIG. 6] FIG. 6 is a diagram illustrating a power transmitting antenna according to a modification.
[FIG. 7] FIG. 7 is a diagram illustrating a power transmitting antenna according to another modification.

### DETAILED DESCRIPTION

### [Problems to be Solved by Present Disclosure]

In the conventional cutting tool, when the electric power of the battery is consumed and exhausted, the battery is to be replaced with a new battery. In this case, an old battery is to be taken out from the battery housing portion and the new battery is to be installed, making it difficult to replace the battery during machining. Thus, when the machining time becomes long and the electric power of the battery is exhausted during the machining, it may become impossible to monitor the subsequent state of the cutting tool. Even when the machining time is long as described above, it is desired to appropriately monitor the state of the cutting tool.

### [Advantageous Effects of Present Disclosure]

According to the present disclosure, the state of the cutting tool during machining can be appropriately monitored.

First, the contents of the embodiment will be listed and described.

### [Overview of Embodiment]

(1) A cutting system according to an embodiment of the present disclosure includes a cutting tool that includes a body portion disposed in a machining space of a machine tool, a sensor provided in the body portion, and a wireless transmission unit that transmits detection information indicating an output of the sensor, and a power supply device that supplies power to the cutting tool. The power supply device includes a power transmitting antenna provided in the machining space, and a control device that controls power supply through the power transmitting antenna. The cutting tool further includes a power receiving antenna circuit that receives electric power wirelessly transmitted from the power transmitting antenna.

According to the above configuration, since the power transmitting antenna is provided within the machining space and the cutting tool includes the power receiving antenna, wireless power supply to the cutting tool becomes feasible within the machining space. Thus, power supply to the cutting tool during machining becomes feasible, enabling continuous detection using the sensor and transmission of detection information even during extended machining time. As a result, the state of the cutting tool during machining can be appropriately monitored.

(2) In the cutting system according to the above (1), the control device may include a processing unit that executes a power supply control process for controlling power supply based on at least one of information indicating a state of the machine tool or the detection information output from a receiver communicably connectable to the wireless transmission unit.

(3) In the cutting system according to the above (2), the information indicating the state of the machine tool may include door information indicating a state of an opening/closing door included in a housing defining the machining space. When controlling the power supply based on the door information, the power supply can be performed during machining performed by the machine tool by performing control so that power is transmitted when the opening/closing door is in a closed state. In addition, when controlling the power supply based on the detection information, the processing unit can perform a power supply control process based on the detection information.

(4) In the cutting system according to the above (1), when the cutting tool further includes a storage battery that stores the electric power, the detection information may include remaining charge information indicating an amount of remaining charge stored in the storage battery. In this case, the processing unit can control the power supply based on the remaining charge information.

(5) In the cutting system according to the above (1), the control device may include a processing unit that executes a process for receiving connection information indicating whether the wireless transmission unit is communicably connected to a receiver communicably connectable to the wireless transmission unit, and a process for performing an output for permitting or restricting start of machining with the machine tool, based on the connection information. In this case, the control device can suppress the start of machining in a state where the wireless transmission unit is unable to transmit the detection information to the receiver.

(6) In the cutting system of the above (1), when the power transmitting antenna further includes an antenna body and a pointing direction changing unit that changes a pointing direction of the antenna body, the control device may include a processing unit that executes a process for controlling the pointing direction changing unit in accordance with a position of the cutting tool in the machining space. In this case, the power supplying radio wave can be transmitted toward the cutting tool, enabling efficient power supply while suppressing radiation of the power supplying radio wave in unnecessary directions.

(7) In the cutting system according to the above (1), when the cutting tool further includes a storage battery that stores the electric power, the detection information includes charging information indicating whether the storage battery is being charged, and the power transmitting antenna further includes an antenna body and a pointing direction changing unit that changes a pointing direction of the antenna body, the control device may include a processing unit that executes a process for controlling the pointing direction changing unit based on the charging information output from a receiver communicably connectable to the wireless transmission unit. In this case, the processing unit can repeatedly change the pointing direction until the charging information indicates that charging is in progress. This allows the processing unit to search for a pointing direction in which the storage battery can be charged.

(8) In the cutting system according to the above (1), the power transmitting antenna may include a plurality of antenna bodies disposed at different positions and a switching unit that switches an antenna used to wirelessly transmit the electric power from among the plurality of antenna bodies. In this case, an antenna body that can appropriately transmit the power supplying radio wave to the cutting tool can be selected from among the plurality of antenna bodies.

(9) In the cutting system according to any one of the above (1) to (8), a frequency of a transmission wave by the wireless transmission unit may be different from a frequency of a power supplying radio wave through the power transmitting antenna. In this case, interference between the transmission wave by the wireless transmission unit and the power supplying radio wave can be suppressed.

(10) In the cutting system of the above (9), the frequency of the power supplying radio wave may be higher than the frequency of the transmission wave. In this case, the influence of harmonics of the power supplying radio wave on the transmission wave can be suppressed, enabling more stable communication by the wireless transmission unit.

(11) An embodiment according to another aspect is a power supply device. The power supply device supplies power to a cutting tool that includes a body portion disposed in a machining space of a machine tool, a sensor provided in the body portion, and a wireless transmission unit that transmits detection information obtained by the sensor. The power supply device includes a power transmitting antenna provided in the machining space, and a control device that controls power supply through the power transmitting antenna.

### [Details of Embodiment]

Hereinafter, preferred embodiments will be described with reference to the drawings. At least some of the embodiments described below may be combined as desired.

### [Overall Configuration]

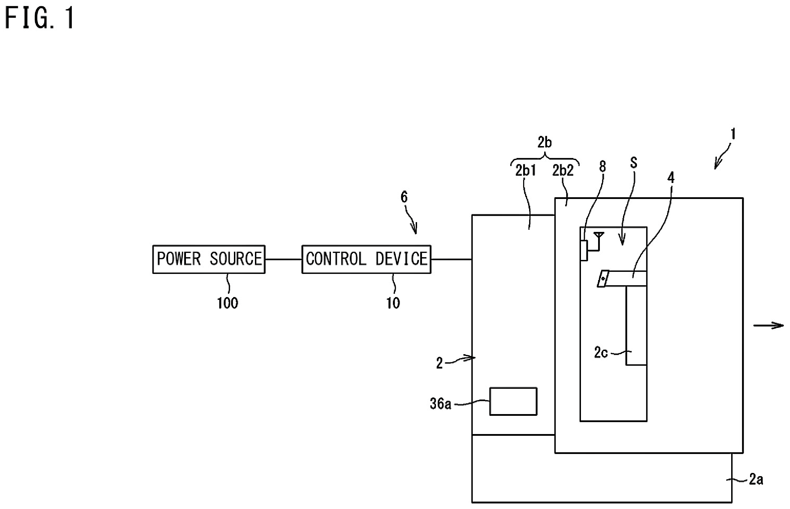

FIG. 1 is a diagram illustrating an overall configuration of a cutting system according to an embodiment. In FIG. 1, a cutting system 1 includes a machine tool 2, a cutting tool 4, and a power supply device 6.

The machine tool 2 is, for example, an NC lathe. The machine tool 2 includes a bed 2a and a housing 2b. The housing 2b is disposed on the upper side of the bed 2a. The inside of the housing 2b is a machining space S. That is, the housing 2b defines the machining space S on the upper side of the bed 2a.

A headstock, a chuck to hold a workpiece, and the like (not shown) are disposed within the machining space S. Furthermore, a turret 2c is disposed within the machining space S. The cutting tool 4 is held by the turret 2c. The cutting tool 4 is a tool for performing cutting machining on a workpiece held by the chuck. More specifically, the cutting tool 4 is a tool for performing turning in cutting machining. Turning is a machining performed by pressing a tool against a rotating workpiece. The cutting tool 4 of the present embodiment includes a sensor, and can monitor the state of the cutting tool 4 and transmit the state to the outside. The cutting tool 4 will be described in detail later.

The housing 2b includes a housing body 2b1 and an opening/closing door 2b2. The housing body 2b1 is fixed to the upper surface of the bed 2a. On the other hand, the opening/closing door 2b2 is movable in a lateral direction with respect to the bed 2a, as indicated by the arrow in FIG. 1. The opening/closing door 2b2 is in a closed state at the position shown in FIG. 1. The opening/closing door 2b2 moves from the position of the closed state in the lateral direction and becomes an open state. When the opening/closing door 2b2 is in the open state, each element disposed within the machining space S is exposed to the outside. When the operator prepares for machining or takes out a machined workpiece, the opening/closing door 2b2 is set to the open state. When the opening/closing door 2b2 is in the closed state, the operator for the machine tool 2 is unable to access the machining space S. Accordingly, when the machine tool 2 is machining, the opening/closing door 2b2 is in the closed state.

The power supply device 6 has a function of wirelessly supplying power to the cutting tool 4. The power supply device 6 includes a power transmitting antenna 8 and a control device 10. The control device 10 has a function of controlling power supply through the power transmitting antenna 8. The control device 10 generates a power supplying signal based on electric power supplied by a power source 100, and provides the signal to the power transmitting antenna 8. The power transmitting antenna 8 is provided within the machining space S. The power transmitting antenna 8 transmits a power supplying signal provided by the control device 10 to the cutting tool 4 as a power supplying radio wave.

### [Cutting Tool]

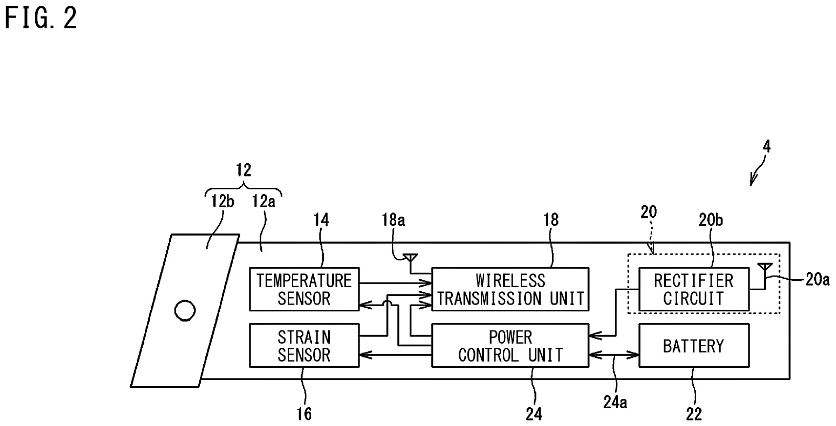

FIG. 2 is a block diagram illustrating an example of the configuration of the cutting tool 4. As shown in FIG. 2, the cutting tool 4 includes a body portion 12, a temperature sensor 14, a strain sensor 16, a wireless transmission unit 18, a rectenna 20, and a battery 22. The body portion 12 includes a shank 12a and a cutting insert 12b. The shank 12a is a metal member having a square columnar shape and held by the turret 2c of the machine tool 2. The cutting insert 12b is a cutting edge that cuts a workpiece by coming into contact with the workpiece. The cutting insert 12b is detachably attached to the distal end of the shank 12a.

The temperature sensor 14, the strain sensor 16, the wireless transmission unit 18, the rectenna 20, and the battery 22 are provided in the shank 12a. The temperature sensor 14 is attached to the shank 12a and detects the temperature of the shank 12a. The temperature sensor 14 includes a thermistor, a thermocouple, or the like. When the temperature sensor 14 is provided with DC electric power by a power control unit 24, which will be described later, the temperature sensor 14 provides an output corresponding to the current temperature measured by the temperature sensor 14 to the wireless transmission unit 18. That is, the output of the temperature sensor 14 indicates the temperature of the shank 12a.

The strain sensor 16 is attached to the shank 12a and detects strain of the shank 12a. The strain sensor 16 includes a strain gauge or the like. When the strain sensor 16 is provided with the DC electric power by the power control unit 24, the strain sensor 16 provides an output corresponding to the current strain of the shank 12a to the wireless transmission unit 18. That is, the output of the strain sensor 16 indicates the strain of the shank 12a.

The rectenna 20 includes a power receiving antenna 20a and a rectifier circuit 20b. The power receiving antenna 20a receives a radio wave from the power supply device 6. The power receiving antenna 20a provides an electric signal of the received radio wave to the rectifier circuit 20b. The rectifier circuit 20b rectifies the electric signal provided by the power receiving antenna 20a, converts the electric signal into DC electric power, and outputs the DC electric power. The DC electric power output by the rectifier circuit 20b is supplied to the sensors 14 and 16 and the wireless transmission unit 18. That is, the rectenna 20 is a power receiving antenna circuit that receives electric power wirelessly transmitted from the power transmitting antenna 8. The DC electric power output by the rectenna 20 is supplied to the power control unit 24.

The power control unit 24 has a function of converting the DC electric power output by the rectenna 20 into a predetermined voltage, controlling charging and discharging of the battery 22, and providing the DC electric power from the rectenna 20 and the DC electric power from the battery 22 to the sensors 14 and 16 and the wireless transmission unit 18. In response to being provided with the DC electric power by the rectenna 20, the power control unit 24 can provide the DC electric power to the sensors 14 and 16, the wireless transmission unit 18, and the battery 22. In addition, in response to being provided with the DC electric power by the rectenna 20, the power control unit 24 can provide the DC electric power only to the battery 22. In this case, the sensors 14 and 16 and the wireless transmission unit 18 are provided with DC electric power by the battery 22. Furthermore, when the power control unit 24 is not provided with the DC electric power by the rectenna 20, the power control unit 24 can provide the DC electric power stored in the battery 22 to the sensors 14 and 16 and the wireless transmission unit 18. The battery 22 stores the DC electric power provided via the power control unit 24. The battery 22 discharges the stored electric power based on the control of the power control unit 24.

The power control unit 24 has a function of detecting an amount of remaining charge stored in the battery 22. The power control unit 24 detects a voltage of a line 24a connecting the power control unit 24 and the battery 22 as the amount of remaining charge stored in the battery 22. That is, the power control unit 24 has a function as a sensor that detects the amount of remaining charge stored in the battery 22. The power control unit 24 provides information indicating the voltage of the line 24a to the wireless transmission unit 18. As described above, the output of the power control unit 24 as a sensor indicates the amount of remaining charge stored in the battery 22.

The wireless transmission unit 18 has a transmitting antenna 18a and has a function of wirelessly communicating with a receiver or the like outside the machining space S. The wireless transmission unit 18 wirelessly communicates with the receiver by, for example, Bluetooth (registered trademark). Thus, the wireless transmission unit 18 performs wireless transmission using a frequency band including 2.4 GHz. The wireless transmission unit 18 wirelessly transmits detection information indicating the output of each sensor. The detection information includes temperature information based on the output of the temperature sensor 14, strain information based on the output of the strain sensor 16, and remaining charge information based on the output of the power control unit 24. The remaining charge information is information indicating the amount of remaining charge stored in the battery 22. The amount of remaining charge stored in the battery is expressed as a numerical value. The temperature information, the strain information, and the remaining charge information are stored in the same packet, for example, and are transmitted as the detection information at predetermined time intervals. When the wireless transmission unit 18 is supplied with the DC electric power by the power control unit 24, the wireless transmission unit 18 establishes communication connection with the receiver and starts wireless transmission.

As described above, the cutting tool 4 operates the sensor based on the electric power supplied by the power supply device 6, and operates the wireless transmission unit 18 to transmit the detection information. Thus, when no power is supplied by the power supply device 6 and the electric power stored in the battery 22 is exhausted, the cutting tool 4 is unable to perform the detection using the sensors or the transmission of the detection information.

### [Power Supply Device]

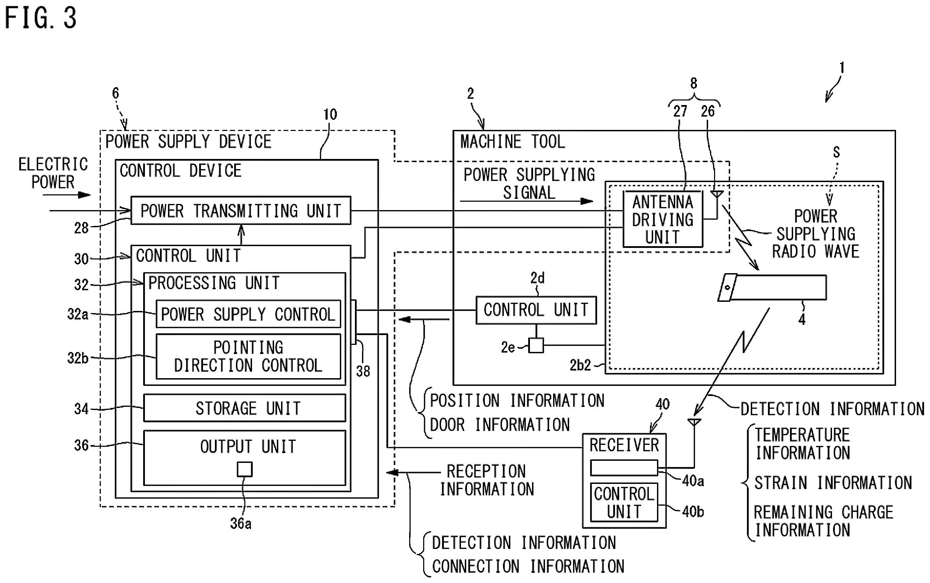

FIG. 3 is a block diagram illustrating an example of the configuration of the power supply device 6. As described above, the power supply device 6 includes the power transmitting antenna 8 and the control device 10. The power transmitting antenna 8 includes an antenna body 26 and an antenna driving unit 27. The antenna body 26 is an antenna having directivity in a certain direction. The antenna driving unit 27 includes a motor for changing the posture of the antenna body 26. The antenna driving unit 27 has a function of changing posture of the antenna body 26 and changing a pointing direction of the antenna body 26. The antenna driving unit 27 is controlled by the control device 10.

The control device 10 includes a power transmitting unit 28 and a control unit 30. The power transmitting unit 28 generates a power supplying signal based on electric power provided by the power source 100 (FIG. 1), and provides the signal to the power transmitting antenna 8. The power transmitting unit 28 of the present embodiment generates a signal of a frequency band including 5.7 GHz. Thus, the power transmitting antenna 8 radiates a radio wave of a frequency band including 5.7 GHz. That is, the frequency of the power supplying radio wave by the power transmitting antenna 8 is higher than the frequency of the transmission wave by the wireless transmission unit 18. The frequency band of the radio wave radiated by the power transmitting unit 28 is not particularly limited, but may be a frequency band including 2.4 GHz or 5.7 GHz from the viewpoint of regulations and the like. However, as in the embodiment, when the frequency of the transmission wave by the wireless transmission unit 18 and the frequency of the power supplying radio wave through the power transmitting antenna 8 are different from each other, interference between both radio waves can be suppressed. Furthermore, when the frequency of the power supplying radio wave through the power transmitting antenna 8 is higher than the frequency of the transmission wave by the wireless transmission unit 18, the influence of harmonics of the power supplying radio wave on the transmission wave can be suppressed, enabling more stable communication by the wireless transmission unit.

The control unit 30 includes a computer or the like that is provided with a processing unit 32, a storage unit 34, an output unit 36, and a reception unit 38. The processing unit 32 is any of various processors suitable for computer control, such as a central processing unit (CPU), a graphics processing unit (GPU), a digital signal processor (DSP), a field programmable gate array (FPGA), an application specific integrated circuit (ASIC), and a quantum processor.

The storage unit 34 is, for example, a flash memory, a hard disk, a read only memory (ROM), a random access memory (RAM), or the like. The storage unit 34 stores a computer program to be executed by the processing unit 32 and necessary information. The processing unit 32 executes the computer program stored in a computer-readable non-transitory recording medium such as the storage unit 34, thereby implementing various process functions of the processing unit 32.

The output unit 36 has a function of outputting various types of information related to the process performed by the processing unit 32 to the outside. The output unit 36 includes a monitor unit 36a. The monitor unit 36a is provided at the housing 2b of the machine tool 2 (see FIG. 1). Accordingly, the output unit 36 can output various information to the operator of the machine tool 2 via the monitor unit 36a. The output unit 36 may include other monitors, indicators, and speakers in addition to the monitor unit 36a. In this case, the output unit 36 outputs various types of information via these devices. The output unit 36 may include a wireless communication device. In this case, the output unit 36 can output various types of information via wireless communication.

The reception unit 38 is an interface for receiving various types of information from the machine tool 2 and a receiver 40. The reception unit 38 is connected to a control unit 2d of the machine tool 2 and the receiver 40. The control unit 2d and the receiver 40 are communicably connected to the control unit 30 in a wired or wireless manner. The control unit 30 receives various information from the control unit 2d and the receiver 40 via the reception unit 38.

The control unit 2d has a function of controlling a position and an operation of each part of the machine tool 2 to perform cutting machining. The control unit 2d provides position information of the cutting tool 4 to the control unit 30. The position information is information indicating a position of the cutting tool 4 within the machining space S. The control unit 2d is connected to a detection sensor 2e that detects whether the opening/closing door 2b2 is in a closed state. The control unit 2d can determine whether the opening/closing door 2b2 is in a closed state based on the output of the detection sensor 2e. The control unit 2d provides door information to the control unit 30. The door information is information indicating whether the opening/closing door 2b2 is in a closed state. The control unit 2d may also provide operation information indicating whether the machine tool 2 is machining to the control unit 30. In this manner, the control unit 2d provides information indicating the state of the machine tool 2 to the control unit 30.

The receiver 40 has a function of wirelessly communicating with the wireless transmission unit 18 of the cutting tool 4. The receiver 40 includes a wireless communication unit 40a and a control unit 40b. The wireless communication unit 40a wirelessly communicates with the wireless transmission unit 18. The control unit 40b controls the wireless communication unit 40a and performs a necessary information process. The control unit 40b receives the detection information transmitted by the wireless transmission unit 18 via the wireless communication unit 40a. The control unit 40b stores the detection information. The detection information stored by the control unit 40b is used to monitor the state of the cutting tool 4.

The control unit 40b also provides reception information to the control unit 30. The reception information includes the detection information and connection information. The detection information is information provided by the cutting tool 4. The connection information is information indicating whether communication connection is established between the wireless communication unit 40a and the wireless transmission unit 18. The state in which the communication connection is established means a state in which the wireless communication unit 40a and the wireless transmission unit 18 exchange information necessary for communication therebetween and information (user data) can be transmitted and received between the wireless communication unit 40a and the wireless transmission unit 18. The control unit 40b may provide the detection information to the control unit 30 as the connection information. In this case, the detection information indicates that the communication connection is established between the wireless communication unit 40a and the wireless transmission unit 18.

The processing unit 32 controls the power transmitting unit 28 based on the information provided by the machine tool 2 and the receiver 40, and controls the power supply through the power transmitting antenna 8. The processing unit 32 has a function of executing a power supply control process 32a and a pointing direction control process 32b.

### [Power Supply Control Process]

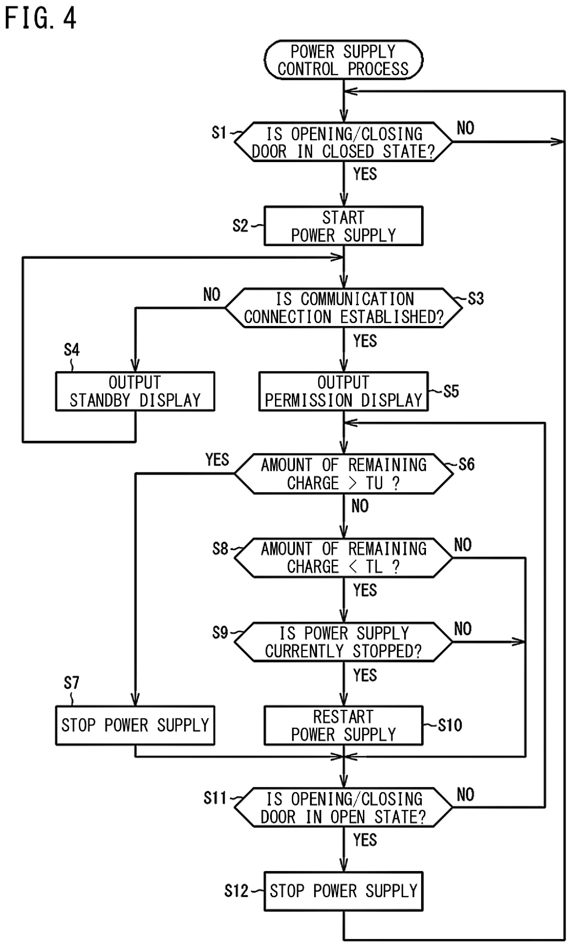

FIG. 4 is a flowchart illustrating an example of a power supply control process executed by the processing unit 32. In FIG. 4, first, the processing unit 32 determines whether the opening/closing door 2b2 is in a closed state in step S1 (step S1 in FIG. 4). The processing unit 32 determines whether the opening/closing door 2b2 is in the closed state based on the door information provided by the control unit 2d of the machine tool 2.

The processing unit 32 repeats the step S1 until the opening/closing door 2b2 is determined to be in the closed state. When the opening/closing door 2b2 is determined in step S1 to be in the closed state, the processing unit 32 proceeds to step S2 and starts power supply to the cutting tool 4 (step S2 in FIG. 4). When the power supply is started, the processing unit 32 proceeds to step S3, and determines whether the communication connection is established between the wireless transmission unit 18 of the cutting tool 4 and the receiver 40 (step S3 in FIG. 4). The processing unit 32 determines whether the communication connection is established between the wireless transmission unit 18 and the receiver 40 based on the connection information provided by the receiver 40.

When the communication connection is determined to be unestablished between the wireless transmission unit 18 and the receiver 40, the processing unit 32 proceeds to step S4 and outputs a standby display to the monitor unit 36a of the output unit 36. The standby display output to the monitor unit 36a is a display for requesting an operator to wait for the start of cutting machining. The processing unit 32 can output the standby display to the monitor unit 36a, thereby outputting the standby display to the operator and causing the operator to wait for the start of machining with the machine tool 2. That is, the standby display is an output for restricting the start of machining with the machine tool 2. After outputting the standby display, the processing unit 32 returns to step S3 again. The processing unit 32 repeats the steps S3 and S4 until the wireless transmission unit 18 and the receiver 40 are determined to be communicably connected to each other.

When the communication connection is determined in step S3 to be established between the wireless transmission unit 18 and the receiver 40, the processing unit 32 proceeds to step S5 and outputs a permission display to the monitor unit 36a of the output unit 36. The permission display output to the monitor unit 36a is a display for notifying the operator that cutting machining may be started. The processing unit 32 can output the permission display to the monitor unit 36a, thereby outputting the permission display to the operator and prompting the operator to start machining. That is, the permission display is an output for permitting the start of machining with the machine tool 2. As described above, the processing unit 32 receives the connection information, and executes a process for generating an output for permitting or restricting the start of machining with the machine tool 2 based on the connection information (steps S3 and S4 in FIG. 4).

The processing unit 32 starts the power supply when the state of the opening/closing door 2b2 is changed from the open state to the closed state. On the other hand, as described above, when no power is supplied by the power supply device 6 and the electric power stored in the battery 22 is exhausted, the cutting tool 4 is unable to perform the detection using the sensors or transmission of the detection information. Thus, immediately after the power supply is started, the electric power of the battery 22 of the cutting tool 4 may be in an exhausted state, and the communication connection may be unestablished between the wireless transmission unit 18 and the receiver 40. When the machining is started in a state where the communication connection is unestablished, the cutting tool 4 is unable to transmit the detection information to the receiver 40.

In this regard, in the present embodiment, after starting the power supply, the processing unit 32 outputs the standby display while the communication connection is unestablished, and outputs the permission display when the communication connection is established. Thus, the processing unit 32 can suppress the start of the machining with the machine tool 2 in a state where the wireless transmission unit 18 is unable to transmit the detection information to the receiver 40.

After outputting the permission display in step S5, the processing unit 32 proceeds to step S6, and determines whether the amount of remaining charge stored in the battery 22 is greater than an upper threshold TU (step S6 in FIG. 4). The processing unit 32 refers to the remaining charge information included in the detection information provided by the receiver 40, and performs determination based on the amount of remaining charge stored in the battery indicated by the remaining charge information. When the amount of remaining charge stored in the battery is determined in step S6 to be greater than the upper threshold value TU, the processing unit 32 stops the power supply to the cutting tool 4 (step S7 in FIG. 4). The upper threshold value TU is set to a value slightly smaller than an amount of remaining charge stored in the battery, at which the battery 22 is fully charged. The upper threshold TU is a threshold for suppressing overcharging of the battery 22. Thus, when the amount of remaining charge stored in the battery is determined to be greater than the upper threshold value TU, the processing unit 32 stops the power supply to the cutting tool 4 and proceeds to step S11.

When it is determined in step S6 that the amount of remaining charge stored in the battery is not greater than the upper threshold TU (equal to or smaller than the upper threshold TU), the processing unit 32 proceeds to step S8 and determines whether the amount of remaining charge stored in the battery is smaller than a lower threshold TL (step S8 in FIG. 4). When the amount of remaining charge stored in the battery is determined to be smaller than the lower threshold value TL, the processing unit 32 determines whether the power supply to the cutting tool 4 is currently stopped (step S9 in FIG. 4). When the power supply is determined to be currently stopped, the processing unit 32 restarts the power supply (step S10 in FIG. 4), and proceeds to step S11. That is, the lower threshold TL is a threshold that defines the amount of remaining charge stored in the battery when the power supply that has been stopped in the step S7 is restarted.

When it is determined in step S8 that the amount of remaining charge stored in the battery is not smaller than the lower threshold TL (equal to or larger than the lower threshold TL), and when it is determined in step S9 that the power supply is being performed, the processing unit 32 proceeds to step S11. In step S11, the processing unit 32 determines whether the opening/closing door 2b2 is in the closed state (step S11 in FIG. 4). When the opening/closing door 2b2 is determined to be in the closed state, the processing unit 32 returns to step S6.

Thus, when the opening/closing door 2b2 is maintained in the closed state after the power supply is started (step S2 in FIG. 4), the processing unit 32 repeats the process from step S6 to step S11 in FIG. 4. Accordingly, the processing unit 32 repeats stopping of the power supply and restarting of the power supply based on the remaining charge information to control the power supply so that the amount of remaining charge stored in the battery 22 is maintained.

When the opening/closing door 2b2 is determined in step S11 to be in the open state, the processing unit 32 proceeds to step S12, stops the power supply, and returns to step S1. When the opening/closing door 2b2 is determined to be in the open state, the machining with the machine tool 2 has been finished. Thus, in step S11, the processing unit 32 can determine whether the machining with the machine tool 2 has finished.

According to the above configuration, the power supply device 6 includes the power transmitting antenna 8 within the machining space S that transmits the power supplying radio wave, and the cutting tool 4 includes the power receiving antenna 20a for receiving the power supplying radio wave, so that wireless power supply to the cutting tool 4 is feasible within the machining space S. Thus, power supply to the cutting tool 4 during machining becomes feasible, enabling continuous detection using the sensors and transmission of detection information even during extended machining time. As a result, the state of the cutting tool 4 during machining can be appropriately monitored.

The control device includes the processing unit 32 that executes a power supply control process for controlling the power supply based on information indicating the state of the machine tool 2. More specifically, the information indicating the state of the machine tool 2 includes the door information. The processing unit 32 executes the power supply control process for controlling the power supply in accordance with the state (door information) of the opening/closing door 2b2, and thus, by controlling the power supply to be performed when the opening/closing door 2b2 is in the closed state, the power supply can be performed while the machining with the machine tool 2 is being performed.

The processing unit 32 receives the door information from the machine tool 2 and the reception information output by the receiver 40, and controls the power supply based on the door information and the reception information. The reception information includes the detection information. Thus, the processing unit 32 can control the power supply based on the detection information in addition to the door information. More specifically, the detection information included in the reception information includes the remaining charge information indicating the amount of remaining charge stored in the battery 22 of the cutting tool 4. Accordingly, the processing unit 32 can control the power supply based on the door information and the remaining charge information.

### [Pointing Direction Control Process]

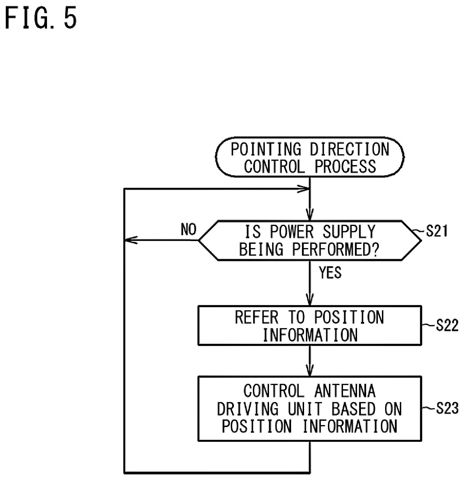

FIG. 5 is a flowchart illustrating an example of a pointing direction control process executed by the processing unit 32. The processing unit 32 executes the pointing direction control process in parallel with the power supply control process. In FIG. 5, first, the processing unit 32 determines whether the opening/closing door 2b2 is in a closed state in step S21 (step S21 in FIG. 5).

The processing unit 32 repeats the step S21 until the opening/closing door 2b2 is determined to be in a closed state. When the opening/closing door 2b2 is determined in step S21 to be in the closed state, the processing unit 32 proceeds to step S22 and refers to the position information (step S22 in FIG. 5). As described above, the position information is information indicating the position of the cutting tool 4 within the machining space S. Referring to the position information, the processing unit 32 proceeds to step S23 and controls the antenna driving unit 27 based on the position information (step S23 in FIG. 5). The processing unit 32 controls the antenna driving unit 27 so that the pointing direction of the antenna body 26 coincides with a direction in which the cutting tool 4 is positioned as much as possible. That is, the antenna driving unit 27 constitutes a pointing direction changing unit that changes the pointing direction of the antenna body 26.

After step S23, the processing unit 32 returns to step S21 and repeats the above process. Accordingly, the processing unit 32 can change the pointing direction of the antenna body 26 in accordance with the position of the cutting tool 4 that changes over time. In this case, the power supplying radio wave is transmitted toward the cutting tool 4, enabling efficient power supply while suppressing radiation of the power supplying radio wave in unnecessary directions.

### [Others]

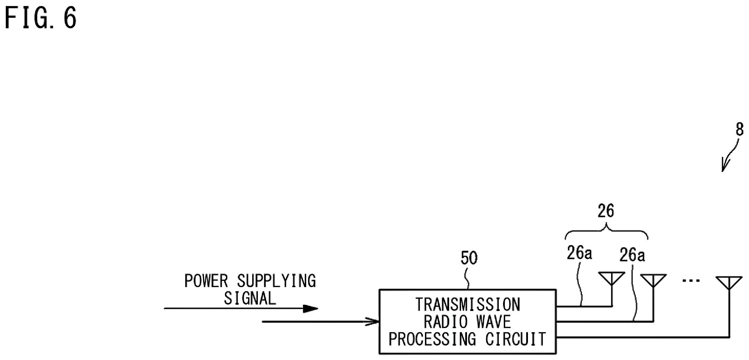

It should be understood that the embodiments disclosed herein are merely illustrative and non-restrictive in every respect. For example, the pointing direction of the antenna body 26 is changed by controlling the antenna driving unit 27 in the above embodiment. However, the power transmitting antenna 8 may include a transmission radio wave processing circuit 50 instead of the antenna driving unit 27, and the antenna body 26 may include a plurality of antenna elements 26a as illustrated in FIG. 6. When the power supplying signal is provided, the transmission radio wave processing circuit 50 distributes the signal to the plurality of antenna elements 26a. In addition, the transmission radio wave processing circuit 50 can adjust the amplitude and phase of each of the plurality of signals to be distributed. Accordingly, the transmission radio wave processing circuit 50 can cause the antenna body 26 to form a beam and change the pointing direction of the antenna body 26. That is, the transmission radio wave processing circuit 50 constitutes a pointing direction changing unit that changes the pointing direction of the antenna body 26. The processing unit 32 controls the transmission radio wave processing circuit 50 to control the pointing direction of the antenna body 26.

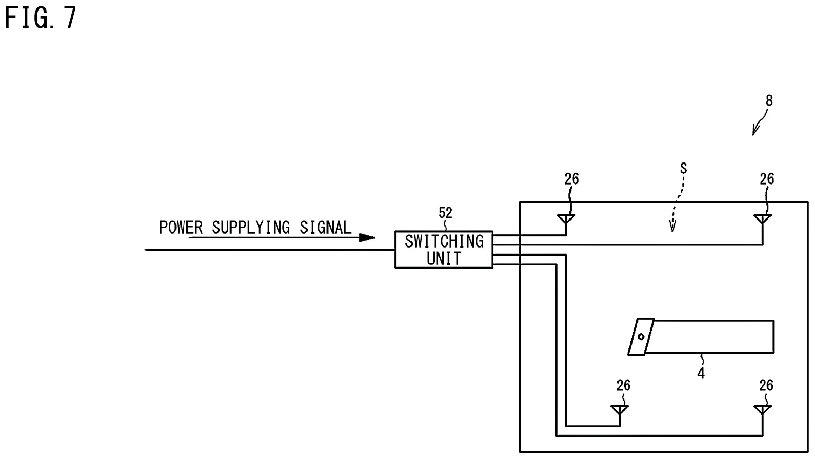

Furthermore, as shown in FIG. 7, the power transmitting antenna 8 may include a plurality of antenna bodies 26 and a switching unit 52. The plurality of antenna bodies 26 are disposed at different positions within the machining space S. The moving range of the cutting tool 4 within the machining space S is divided among respective ranges in which the plurality of antenna bodies 26 can transmit and receive the signal. Thus, the plurality of antenna bodies 26 include an antenna body 26 for which the cutting tool 4 is positioned in the range in which transmission and reception are possible. The switching unit 52 has a function of switching an antenna that radiates a power supplying radio wave from among the plurality of antenna bodies 26. The switching unit 52 is controlled by the processing unit 32.

In this case, the processing unit 32 may control the switching unit 52 based on the position information of the cutting tool 4, or may control the switching unit 52 based on charging information described later. In this case, an antenna body that can appropriately transmit the power supplying radio wave to the cutting tool can be selected from among the plurality of antenna bodies.

In the above embodiment, the wireless transmission unit 18 of the cutting tool 4 wirelessly communicates with the receiver 40, and the power supply device 6 does not have a function of wirelessly communicating with the cutting tool 4. However, the power supply device 6 may have the function of the receiver 40.

In the above embodiment, the processing unit 32 executes the power supply control process based on the door information, which is information indicating the state of the machine tool 2, and the reception information including the detection information. However, the processing unit 32 may be configured to execute the power supply control process based on at least one of the information indicating the state of the machine tool 2 or the reception information including the detection information. For example, when the control device 10 has a power supply start switch, the processing unit 32 can perform the power supply control process based on the reception information without using the door information. The power supply start switch is a switch that can receive an operation by an operator. When the power supply start switch receives the operation by the operator, the processing unit 32 starts the power supply. In this case, the processing unit 32 can control the power supply based on the remaining charge information included in the detection information.

In the above embodiment, the processing unit 32 uses the door information as information indicating the state of the machine tool 2. However, the processing unit 32 may be configured to execute the power supply control process using the operation information of the machine tool 2 instead of or in combination with the door information.

In the above embodiment, the standby display is output while the communication connection is unestablished between the wireless transmission unit 18 and the receiver 40, and the permission display is output when the connection is established. However, instead of the standby display and the permission display, the processing unit 32 may provide an instruction to permit or restrict the machining to the control unit 2d of the machine tool 2. In this case, the processing unit 32 can directly control the machine tool 2 to permit or restrict the start of machining.

In the above embodiment, the temperature information, the strain information, and the remaining charge information included in the detection information are stored in the same packet and transmitted. However, the present disclosure is not limited thereto. Furthermore, the variation in the remaining charge information is small than the variation in the temperature information and the variation of the strain information. Thus, the transmission frequency of the remaining charge information may be set to be lower than the transmission frequency of the temperature information and the transmission frequency of the strain information. The detection information may include the charging information indicating whether the battery 22 is being charged.

When the detection information includes the charging information, the processing unit 32 can control the antenna driving unit 27 based on the charging information included in the reception information to change the pointing direction of the antenna body 26. In this case, the processing unit 32 can repeatedly change the pointing direction until the charging information indicates that charging is in progress. This allows the processing unit 32 to search for a pointing direction in which the battery 22 can be charged.

Furthermore, the stop of the power supply and the restart of the power supply are controlled based on the remaining charge information in the above embodiment. However, for example, when the reception information and the detection information include a communication quality (for example, a bit error rate (BER) or the like) of the wireless communication between the wireless transmission unit 18 and the receiver 40, the processing unit 32 may change the electric power (signal intensity) for power supply during power supply based on the communication quality. The power supplying radio wave may cause interference in wireless communication between the wireless transmission unit 18 and the receiver 40. Thus, the electric power for power supply is controlled to be reduced in accordance with a reduction in the communication quality. Accordingly, the electric power for power supply is controlled to be a value that enables wireless communication between the wireless transmission unit 18 and the receiver 40 while supplying power to the cutting tool 4.

In the above embodiment, the cutting tool 4 is a tool for turning machining, but the cutting tool 4 may be a tool for performing milling of cutting machining. The milling is a machining performed by pressing a tool against a fixed workpiece while rotating the tool.

In the above embodiment, the temperature sensor 14 and the strain sensor 16 are used as sensors provided in the cutting tool 4, but other sensors such as an acceleration sensor may be used. In the above embodiment, the cutting tool 4 includes the battery 22 (secondary battery), but a capacitor may be used instead of the battery 22.

The scope of the present invention is defined by the claims, not in the sense described above, and is intended to include all modifications within the scope and meaning equivalent to the claims.

### REFERENCE SIGNS LIST

1 cutting system
2 machine tool
2a bed
2b housing
2b1 housing body
2b2 opening/closing door
2c turret
2d control unit
2e detection sensor
4 cutting tool
6 power supply device
8 power transmitting antenna
10 control device
12 body portion
12a shank
12b cutting insert
14 temperature sensor
16 strain sensor
18 wireless transmission unit
18a transmitting antenna
20 rectenna (power receiving antenna circuit)
20a power receiving antenna
20b rectifier circuit
22 battery
24 power control unit
24a line
26 antenna body
26a antenna element
27 antenna driving unit (pointing direction changing unit)
28 power transmitting unit
30 control unit
32 processing unit
32a power supply control process
32b pointing direction control process
34 storage unit
36 output unit
36a monitor unit
38 reception unit
40 receiver
40a wireless communication unit
40b control unit
50 transmission radio wave processing circuit (pointing direction changing unit)
52 switching unit
100 power source
S machining space

## Claims

1. A cutting system comprising:
a cutting tool including a body portion disposed in a machining space of a machine tool, a sensor provided in the body portion, and a wireless transmission unit configured to transmit detection information indicating an output of the sensor; and
a power supply device configured to supply power to the cutting tool, wherein
the power supply device includes:
a power transmitting antenna provided in the machining space; and
a control device configured to control power supply through the power transmitting antenna, and
the cutting tool further includes a power receiving antenna circuit configured to receive electric power wirelessly transmitted from the power transmitting antenna.

2. The cutting system according to claim 1, wherein
the control device includes a processing unit configured to execute a power supply control process for controlling power supply based on at least one of information indicating a state of the machine tool or the detection information output from a receiver communicably connectable to the wireless transmission unit.

3. The cutting system according to claim 2, wherein
the information indicating the state of the machine tool includes door information indicating a state of an opening/closing door included in a housing defining the machining space.

4. The cutting system according to claim 1, wherein
the cutting tool further includes a storage battery configured to store the electric power, and
the detection information includes remaining charge information indicating an amount of remaining charge stored in the storage battery.

5. The cutting system according to claim 1, wherein
the control device includes a processing unit configured to execute:
a process for receiving connection information indicating whether the wireless transmission unit is communicably connected to a receiver communicably connectable to the wireless transmission unit; and
a process for performing an output for permitting or restricting start of machining with the machine tool, based on the connection information.

6. The cutting system according to claim 1, wherein
the power transmitting antenna further includes:
an antenna body; and
a pointing direction changing unit configured to change a pointing direction of the antenna body, and
the control device includes a processing unit configured to execute a process for controlling the pointing direction changing unit in accordance with a position of the cutting tool in the machining space.

7. The cutting system according to claim 1, wherein
the cutting tool further includes a storage battery configured to store the electric power,
the detection information includes charging information indicating whether the storage battery is being charged,
the power transmitting antenna further includes:
an antenna body; and
a pointing direction changing unit configured to change a pointing direction of the antenna body, and
the control device includes a processing unit configured to execute a process for controlling the pointing direction changing unit based on the charging information output from a receiver communicably connectable to the wireless transmission unit.

8. The cutting system according to claim 1, wherein
the power transmitting antenna further includes:
a plurality of antenna bodies disposed at different positions; and
a switching unit configured to switch an antenna used to wirelessly transmit the electric power from among the plurality of antenna bodies.

9. The cutting system according to any one of claims 1 to 8, wherein a frequency of a transmission wave by the wireless transmission unit is different from a frequency of a power supplying radio wave through the power transmitting antenna.

10. The cutting system according to claim 9, wherein the frequency of the power supplying radio wave is higher than the frequency of the transmission wave.

11. A power supply device for supplying power to a cutting tool, the cutting tool including a body portion disposed in a machining space of a machine tool, a sensor provided in the body portion, and a wireless transmission unit configured to transmit detection information obtained by the sensor, the power supply device comprising:
a power transmitting antenna provided in the machining space; and
a control device configured to control power supply through the power transmitting antenna.
